Europäisches Patentamt

European Patent Office

Office européen des brevets

(19)

(11) EP 0 555 714 B1

(12) EUROPÄISCHE PATENTSCHRIFT

(45) Veröffentlichungstag und Bekanntmachung des Hinweises auf die Patenterteilung:
17.06.1998 Patentblatt 1998/25

(51) Int Cl.⁶: **G01D 1/02**, B01D 3/42

(21) Anmeldenummer: 93101494.8

(22) Anmeldetag: 01.02.1993

(54) **Regelung von Konzentrationen bei thermischen Trennverfahren**

Regulation of concentrations for thermal separation

Régulation de concentrations pour procédés de séparation thermique

(84) Benannte Vertragsstaaten:
**BE DE ES FR GB IT NL**

(30) Priorität: **12.02.1992 DE 4203999**

(43) Veröffentlichungstag der Anmeldung:
**18.08.1993 Patentblatt 1993/33**

(73) Patentinhaber: **BAYER AG**
**51368 Leverkusen (DE)**

(72) Erfinder:
• **Rhiel, Franz Ferdinand, Dr.**
**W-4047 Dormagen-Delhoven (DE)**
• **Weymans, Günther, Dr.**
**W-5090 Leverkusen 1 (DE)**
• **Mahiout, Said, Dr.**
**W-5060 Bergisch Gladbach 2 (DE)**

(56) Entgegenhaltungen:
EP-A- 0 242 555          EP-A- 0 413 866
DE-A- 3 627 287          GB-A- 2 144 648
US-A- 3 238 111          US-A- 3 268 420
US-A- 3 417 014          US-A- 4 578 151

• **IFAC Dynamics and Control of Chemical Reactors (DYCORD+'89), Maastricht (NL), 1989, pages 35 to 39, F.F.Rhiel et al., "Model-Based Control Systems for Distillation Columns".**

**Beschreibung**

Die Erfindung geht aus von einem Verfahren zur Regelung der Konzentration eines Mehrstoffgemisches am Ausgang eines thermischen Trennapparates, bei dem im Trennapparat die Temperatur T und der Druck P gemessen werden und aus diesen Meßwerten eine druckkompensierte Temperatur T* = f(T,P) gebildet wird, die als Ersatzregelgröße für wenigstens eine Konzentration benutzt wird, wobei der Ist-Wert der druckkompensierten Temperatur T* mit einem vorgegebenen Sollwert verglichen wird und der Druck P in der geometrischen Nähe der Meßstelle für die Temperatur T im Systemteil des Trennapparates gemessen wird, so daß der Druck P im physikalischen Zusammenhang mit dieser Temperatur T steht.

Bei der Regelung von nicht direkt on-line meßbaren Konzentrationen in thermischen Trennvorgängen werden in vielen Fällen Temperaturen als Ersatzregelgröße verwendet. Um eine genügend gute Korrelation mit der Regelgröße "Konzentration" zu erhalten, ist in der Vergangenheit häufig das Konzept der druckkompensierten Temperatur verwendet worden, in welchem die durch Druckschwankungen bedingten Termperaturänderungen Berücksichtigung finden und die verbleibenden Temperaturänderungen ein besseres Maß für die zu regelnde Konzentration darstellen (siehe zum Beispiel F. F. Rhiel, R. Perne, S. Pauen und F. Steffens, "Model-Based Control Systems For Distillation Columns (DYCORD+'89)", Maastricht, Seiten 35 bis 39).

Dieses Konzept hat insbesondere nützliche Anwendungen im Bereich der Regelung von Sumpfkonzentrationen in Destillationskolonnen gefunden. Durch einen begrenzten Arbeitsbereich sowie die Beschränkung auf Drücke oberhalb des Normaldrucks ist dieses Regelungsverfahren aber leider nur begrenzt einsetzbar.

Generell betrifft das Problem der konstanten, geregelten Reaktionsführung bei der Herstellung von Polymeren alle Polymerisations-, Polykondensations- und Polyadditionsverfahren, in denen verfahrensbedingte Druck- bzw. Temperaturschwankungen und Druck- bzw. Temperaturstörungen die Konstanz der Qualität des Polymeren beeinflussen. Konventionelle Regelkonzepte haben generell den Nachteil, daß sie den Prozeßtrend zu spät erkennen und damit nicht mehr den rechtzeitigen Eingriff in den Herstellungsprozeß durch Stellgrößen ermöglichen.

Das in DE-A-36 27 287 beschriebene Verfahren, in welchem speziell für die kontinuierliche Herstellung von Polyvinylchlorid die Reaktorinnentemperatur durch die Kühlwassermenge und die Zulaufmenge an Aktivatorlösung durch die Kühlwasserrücklauftemperatur geregelt wird, wodurch die Polymerisationstemperatur auf einem festgelegten Wert konstant gehalten wird und der Polymerisationsdruck stets unterhalb des Sättigungsdrucks des Vinylchlorids liegt und durch Feinregulierung der Zulaufmenge an flüssigem Vinylchlorid variiert wird, versucht, einige dieser Nachteile zu beheben.

Um die Nachteile der bisher bei thermischen Trennverfahren bekannten Regelungskonzepte zu beheben, sollte ein neues Regelungsprinzip für einen großen Arbeitsbereich - und zusätzlich auch anwendbar im Vakuum- und Niederdruckbereich - gefunden werden, welches eine hohe Flexibilität hat und auch für andere verfahrenstechnische Operationen einsetzbar ist.

Der Erfindung liegt also die Aufgabe zugrunde, die Ausgangskonzentration eines Mehrstoffgemisches in einem thermischen Trennapparat unter Verwendung einer druckkompensierten Temperatur als Ersatzregelgröße für die Ausgangskonzentration konstant zu regeln, wobei in einem weiten Druck- und Temperaturbereich (großer Arbeitsbereich) eine hohe Regelgüte gewährleistet ist. Dies bedeutet, daß die Regelung in einem weiten Druck- und Temperatur-Arbeitsbereich sehr empfindlich auf Konzentrationsänderungen reagiert und damit eine hohe Regelgenauigkeit erzielt wird, und daß auch große Konzentrationsstörungen einwandfrei abgefangen werden können. Insbesondere soll diese Regelung anwendbar sein und eingesetzt werden, wenn im Trennapparat Niederdruck bzw. Vakuum herrscht.

Weiterhin soll das Regelverfahren auch bei Stoffgemischen eingesetzt werden, die typischerweise ein nicht ideales thermodynamisches Gleichgewichtsverhalten zeigen. Dies gilt normalerweise für die meisten Trennaufgaben in der chemischen Industrie, während z. B. die aus Kohlenwasserstoffen bestehenden Stoffgemische in der Petrochemie ein ideales Gemisch darstellen.

Diese Aufgabe wird bei dem eingangs beschriebenen Regelverfahren auf der Basis einer druckkompensierten Temperatur T* erfindungsgemäß dadurch gelöst, daß die Ist-Werte der druckkompensierten Temperatur T* nach der Beziehung

$$T^* = T - A_1/(A_2 - \log(P))$$

gebildet werden, wobei A1 und A2 Konstanten sind, die vor dem Beginn der Regelung in an sich bekannter Weise empirisch bestimmt werden.

Vorteile der vorliegenden Erfindung sind unter anderem:

a) Der Arbeitsbereich der neuen Regelung ist hinsichtlich Druck (P)- und Temperatur (T)-Bereich nicht beschränkt.

b) Es ist ein unkritischer Regelprozeß; auch große Störungen können leicht abgefangen werden.

c) Es können einfache Regler verwendet werden.

d) Das Verfahren ermöglicht das genaue Einhalten von Produktspezifikationen bei geringem Energieeinsatz und ist daher wirtschaftlich günstig.

Als geeignete verfahrenstechnische Operationen kommen Operationen aus dem Bereich der thermischen Trenntechnik in Frage, also Destillation und Rektifikation. Destillationskolonnen sind zum Beispiel Glockenbodenkolonnen, Packungskolonnen, Siebbodenkolonnen.

Die Stoffsysteme enthalten zwei oder mehr Stoffkomponenten, insbesondere drei bis sieben Stoffkomponenten in solchen Konzentrationsverhältnissen, daß eine Komponente im Vergleich zu den anderen ein Leichtsieder ist. Geeignete Stoffkomponenten liegen flüssig oder gasförmig vor, sind organisch oder anorganisch und konnen sowohl Polymere wie Oligomere, wie niedermolekulare Substanzen sein.

Beispiele sind Benzol, Monoethylenglykol, Diethylenglykol, aprotische apolare Lösungsmittel, Polykondensate, Polyurethane und deren Vorkomponenten, Polymerisate und andere Polyadditionsprodukte, Dialkylcarbonate, Methylnitrit.

Die Temperatur T wird gemessen an einer nach den bisher bekannten Verfahren ausgewählten Stelle des zu regelnden Systemteils, zum Beispiel im Abtriebsteil oder im Verstärkerteil der Destillationskolonne.

Der Druck P wird in der geometrischen Nähe dieser Temperaturmeßstelle für den Systemteil erfaßt, zum Beispiel auf dem gleichen Destillationsboden oder bis zu drei Böden entfernt. P steht damit in physikalischem Zusammenhang mit der gemessenen Temperatur T.

Zur Bestimmung der Größen A1, A2 sowie des Sollwertes T* (Soll) geht man in der Regel so vor, daß man für den zu regelnden Systemteil in dem interessierenden Arbeitsbereich zu verschiedenen Zeitpunkten Temperaturen T1, T2 ... und die entsprechenden Drücke P1, P2 ... experimentell bestimmt. Je größer der betrachtete Arbeitsbereich ist, um so mehr - über den gesamten Arbeitsbereich ausgewählte - Meßpunkte Ti und Pi werden bestimmt. Im allgemeinen nimmt man zwischen drei und zehn Meßwerte Ti und Pi.

Unter Verwendung der erfindungsgemäßen Funktion f (T,P) werden mit diesen Meßwerten die Konstanten A1 und A2 sowie T* (Soll) durch Regression bestimmt.

In der Praxis liegt die Größe A1 im Bereich zwischen 1000 und 2000, während die Größe A2 einen Wert von 2 bis 10 hat.

Geeignete Regler sind P-Regler, PI-Regler, PID-Regler, schaltende Regler, Zweipunkt-Regler mit und ohne Hysterese, Dreipunkt-Regler mit und ohne Hysterese, Kaskadenregelungen, adaptive Regler, Zustandsregler, frequenzabhängige Regler, nichtlineare Regler, prädiktive Regler, modellgestützte Regelungen, Mehrgrößenregler, Entkopplungsregler.

Zur Messung der Temperatur T kommen als Meßfühler in Frage: Thermometer, Thermoelemente, Widerstandsthermometer, PT100, Infrarotmessung.

Das nachfolgende, an Hand von Zeichnungen erläuterte Beispiel belegt für eine Destillationsaufgabe die Nützlichkeit des erfindungsgemäßen Verfahrens.

Es zeigen:

Fig. 1      eine Destillationskolonne mit dem erfindungsgemäßen Regelkreis und

Fig. 2      die Meßgrößen T und P und die als Regelgröße benutzte, druckkompensierte Temperatur T* = f(T,P) als Funktion der Zeit bei dem nachfolgend beschriebenen Prozeßbeispiel.

Erfindungsgemäßes Beispiel

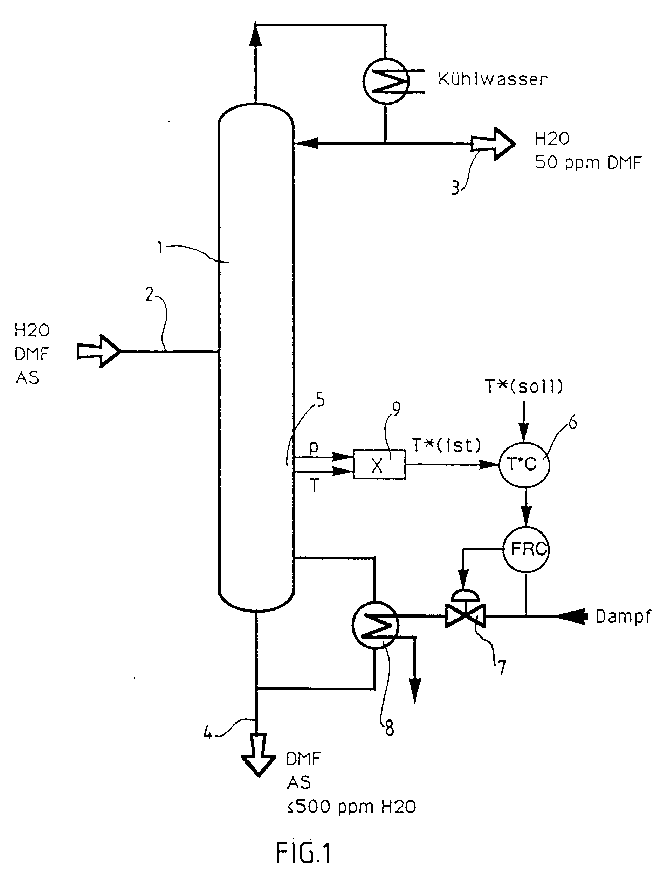

In einer Destillationskolonne 1 (Fig. 1) ist ein ternäres Gemisch, bestehend aus Wasser, Dimethylformamid (DMF) und Ameisensäure (AS), zu trennen. Die Konzentrationen des der Kolonne bei 2 zulaufenden Stoffsystems sind:

| | |
|---|---|
| Wasser | 13 - 17 Gew.-% |
| DMF | 83 - 87 Gew.-% |
| AS | 100 - 5000 Gew.-ppm. |

Die Schwankungen der Zulaufmenge liegen im Bereich von 30 bis 100 %.
Die Kolonne soll so gefahren werden, daß das am Kopf 3 der Kolonne anfallende Wasser einen DMF-Anteil von ca. 50 Gew.-ppm enthält. Das vom Sumpf 4 abgezogene Produkt DMF und AS soll einen Wassergehalt von nicht mehr als 500 ppm besitzen.

Unter den genannten Bedingungen ist die Kolonne so zu betreiben, daß die vorgegebenen Produktspezifikationen mit minimalem Energieeinsatz eingehalten werden.

Zur Regelung der Wasserkonzentation im Sumpfprodukt soll die aus den aktuell gemessenen Druck- und Temperaturwerten an der Meßstelle 5 bestimmte, druckkompensierte Temperatur T* als Ersatzregelgröße verwendet werden.

Um die Größen A1 und A2 zu ermitteln, wurde die Kolonne zunächst bei unterschiedlichen Lastfällen so betrieben, daß an der Meßstelle 5 eine konstante Wasserkonzentration im jeweils stationären Zustand vorlag. Folgende Druck und Temperaturwerte wurden dabei gemessen:

| Druck (mbar) | 150 | 180 | 210 | 250 | 280 | 300 |
|---|---|---|---|---|---|---|
| Temperatur (°C) | 89,7 | 94,4 | 98,6 | 103,4 | 106,6 | 108,6 |

Aus diesen Wertepaaren wurden durch Regression ermittelt:
A1 = 1377, A2 = 7,010678.

Für die geforderte, konstant zu haltende Wasserkonzentration ergab sich folgender Sollwert für die druckkompensierte Temperatur:
T*(soll) = 78,2 °C.

Der Ist-Wert der druckkompensierten Temperatur T* (ist) wird jeweils aus den aktuellen Druck- und Temperaturmeßwerten nach der folgenden Gleichung bestimmt:

$$\text{(i)} \qquad T^*(\text{ist}) = T - 1377/(7{,}010678 - \log(P)).$$

In dieser Gleichung sind T die aktuell gemessene Temperatur in °C und P der dazugehörende aktuell gemessene Druck in mbar. Der vom Rechner 9 gemäß (i) berechnete Ist-Wert T*(ist) und der Sollwert T* (soll) werden dem PID-Regler 6 zugeführt, der über die Dampfmenge (Stellventil 7) und mittels des Wärmetauschers 8 über die Heizleistung am Sumpf der Kolonne auf die Kolonne übergreift.

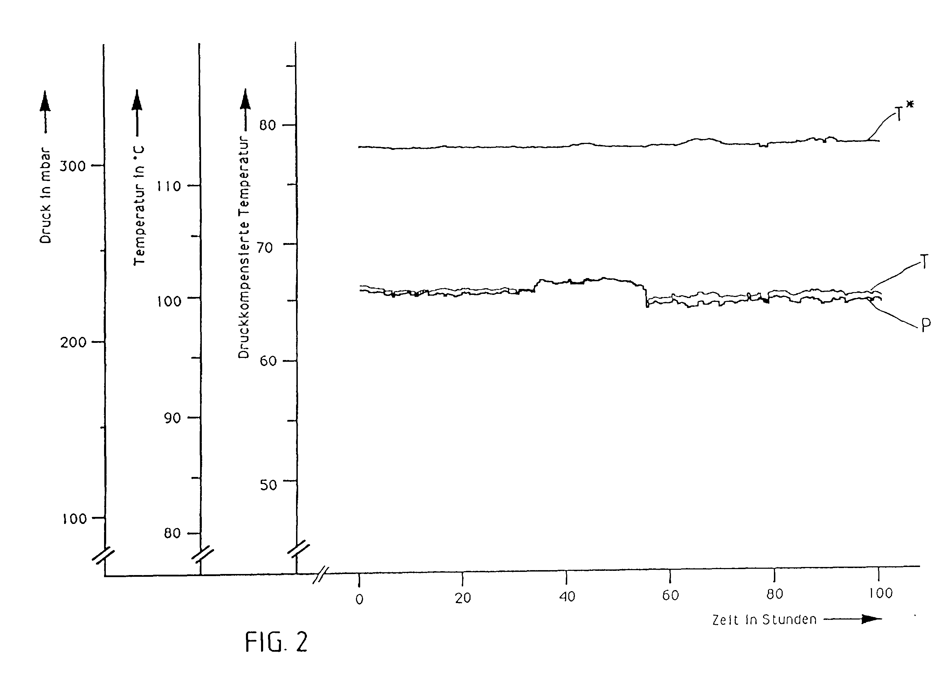

Mit dieser Regeleinrichtung konnte die Wasserkonzentration im Sumpfprodukt in sehr engen Grenzen gehalten und die Kolonne damit näher an der Spezifikationsgrenze gefahren werden. Das Diagramm (Fig. 2) enthält den zeitlichen Verlauf der aktuell gemessenen Temperatur mit dem dazugehörenden Druck sowie dem daraus nach (i) bestimmten Istwert der druckkompensierten Temperatur. Das Diagramm läßt den im Vergleich zu Druck und Temperatur sehr ruhigen Verlauf der druckkompensierten Temperatur erkennen. Dies macht deutlich, daß die Kolonne in einem sehr stabilen und ruhigen Zustand nahe an der Spezifikationsgrenze und damit mit minimalem Energieeinsatz gefahren werden kann.

Nichterfindungsgemäßes Verfahren:

Anstelle der erfindungsgemäß verwendeten Funktion f(T,P) wird eine lineare, druckkompensierte Temperatur nach der Beziehung

$$f(T,P) = T - a1 \times P$$

verwendet. Dies ergab Abweichungen der Wasserkonzentration von über 200 ppm. Aufgrund dieser Abweichung und der unruhigen Kolonnenfahrweise lag der Arbeitspunkt in einem größeren Abstand von der Spezifikationsgrenze. Der Energieverbrauch war mindestens 10 % höher als im erfindungsgemäßen Beispiel.

**Patentansprüche**

1. Verfahren zur Regelung der Konzentrationen eines Mehrstoffgemisches am Ausgang eines thermischen Trennapparates, bei dem im Trennapparat die Temperatur T und der Druck P gemessen werden und aus diesen Meßwerten eine druckkompensierte Temperatur T* = f(T,P) gebildet wird, die als Ersatzregelgröße für wenigstens eine Konzentration benutzt wird, wobei der Ist-Wert der druckkompensierten Temperatur T* mit einem vorgegebenen Sollwert verglichen wird, wobei der Druck P in der geometrischen Nähe der Meßstelle für die Temperatur T im Systemteil des Trennapparates gemessen wird, so daß der Druck P im physikalischen Zusammenhang mit dieser Temperatur T steht, dadurch gekennzeichnet, daß die Ist-Werte der druckkompensierten Temperatur T* nach der Beziehung

$$T^* = T - A_1/(A_2\text{-}\log(P))$$

gebildet werden, wobei $A_1$, und $A_2$ Konstanten sind, die vor dem Beginn der Regelung in an sich bekannter Weise empirisch bestimmt werden.

2. Verfahren nach Anspruch 1, dadurch gekennzeichnet, daß die Regelung bei einem Destillations- oder Rektifikationsverfahren eingesetzt wird.

3. Verfahren nach den Ansprüchen 1 bis 2, dadurch gekennzeichnet, daß das Mehrstoffgemisch als Komponenten überwiegend Dimethylformamid, Wasser und Ameisensäure enthält.

4. Verfahren nach den Ansprüchen 1 bis 3, dadurch gekennzeichnet, daß die Größe A1 in der Funktion f(T,P) einen Wert zwischen 1000 und 2000 hat.

5. Verfahren nach den Ansprüchen 1 bis 4, dadurch gekennzeichnet, daß die Größe A2 in der Funktion f(T,P) einen Wert von 2 bis 10 hat.

## Claims

1. Process for controlling the concentrations of a multi-component mixture at the outlet of a thermal separation apparatus, in which the temperature T and the pressure P are measured in the separation apparatus and from these measured values a pressure-compensated temperature $T^* = f(T,P)$ is formed which is used as a substitute control variable for at least one concentration, wherein the actual value of the pressure-compensated temperature T* is compared with a pre-set theoretical value, and wherein the pressure P is measured in the geometrical vicinity of the measurement point for the temperature T in the system part of the separation apparatus so that the pressure P is in physical connection with this temperature T, characterized in that the actual values of the pressure-compensated temperature T* are formed according to the equation

$$T^* = T - A_1/(A_2\text{-}\log(P))$$

in which $A_1$ and $A_2$ are constants which are determined empirically in known manner before the control begins.

2. Process according to Claim 1, characterized in that the control is used in a distillation or rectification process.

3. Process according to Claim 1 or 2, characterized in that as components the multi-component mixture predominantly contains dimethyl formamide, water and formic acid.

4. Process according to any of Claims 1 to 3, characterized in that the variable $A_1$ in the function f(T,P) has a value between 1000 and 2000.

5. Process according to any of Claims 1 to 4, characterized in that the variable $A_2$ in the function f (T,P) has a value of 2 to 10.

## Revendications

1. Procédé pour la régulation des concentrations d'un mélange de plusieurs substances à la sortie d'un appareil de séparation thermique dans lequel on mesure dans l'appareil de séparation la température T et la pression P et on forme à partir de ces valeurs de mesure une température compensée par pression T° = f(T,P) que l'on utilise comme grandeur de régulation de remplacement pour au moins une concentration, en comparant la valeur effective de la température compensée par pression T° avec une valeur de consigne préétablie, en mesurant la pression P au voisinage géométrique du site de mesure pour la température T dans la partie système de l'appareil de séparation de sorte que la pression P est liée physiquement à cette température T, caractérisé en ce que les valeurs effectives de la température compensée par pression T° sont formées selon la relation

$$T° = T - A_1/(A_2\text{-log}(P))$$

où $A_1$ et $A_2$ sont des constantes qui sont déterminées empiriquement de manière connue en soi avant le début de la régulation.

2. Procédé selon la revendication 1, caractérisé en ce que la régulation est utilisée dans un procédé de distillation ou de rectification.

3. Procédé selon les revendications 1 et 2, caractérisé en ce que le mélange de plusieurs substances contient comme composants principalement du diméthylformamide, de l'eau et de l'acide formique.

4. Procédé selon les revendications 1 à 3, caractérisé en ce que la grandeur $A_1$ dans la fonction f(T,P) a une valeur comprise entre 1 000 et 2 000.

5. Procédé selon les revendications 1 à 4, caractérisé en ce que la grandeur $A_2$ dans la fonction f(T,P) a une valeur de 2 à 10.

FIG.1

8

Druck in mbar

Temperatur in °C

Druckkompensierte Temperatur

T*

T

P

80

70

60

50

110

100

90

80

300

200

100

0    20    40    60    80    100

Zeit in Stunden

FIG. 2